**Europäisches Patentamt**

**European Patent Office**

**Office européen des brevets**

(11) Veröffentlichungsnummer: **0 123 770**
A2

(12) **EUROPÄISCHE PATENTANMELDUNG**

(21) Anmeldenummer: 83890175.9

(51) Int. Cl.³: **B 23 P 15/40**

(22) Anmeldetag: **10.10.83**

(30) Priorität: **15.10.82 AT 3800/82**

(71) Anmelder: **VEREINIGTE EDELSTAHLWERKE AKTIENGESELLSCHAFT (VEW), Elisabethstrasse 12, A-1010 Wien (AT)**

(43) Veröffentlichungstag der Anmeldung: **07.11.84 Patentblatt 84/45**

(72) Erfinder: **Bryda, Erwin, Siedlungsstrasse 2, A-3333 Bruckbach (AT)**

(74) Vertreter: **Widtmann, Georg, Dr., Vereinigte Edelstahlwerke Aktiengesellschaft (VEW) Elisabethstrasse 12, A-1010 Wien (AT)**

(84) Benannte Vertragsstaaten: **BE DE FR IT SE**

(54) **Verfahren zur Herstellung von Schermessern für Warmschnitte.**

(57) Die Erfindung betrifft ein Verfahren zur kostengünstigen Herstellung von Schermessern für Warmschnitte, z.B. für Stranggußanlagen, Brammenscheren od.dgl. Um dies ohne Qualtitätsminderung zu erreichen, ist vorgesehen, daß ein dem gewünschten Schermesserprofil entsprechender Verbundkörperrohling aus einem Warmarbeitsstahl als Basiswerkstoff (1) und einer daraufgesetzten Schneide (2) aus einer ausscheidungshärtbaren, warmfesten Nickelbasislegierung derart gebildet wird, daß die Verbindungsflächen gegenseitig verzahnt, vorzugsweise nach Art einer Nut/Feder- bzw. einer Schwalbenschwanz-Verbindung gestaltet sind, und daß im äußeren Fugenbereich dieser Flächen eine vorzugsweise tulpenförmig ausgeführte Verbindungsschweißung (3) mit hochwarmfestem, thermoschockbeständigem Schweißmetall vorgenommen wird, wobei die zur Befestigung vorzugsweise im Basiswerkstoff (1) vorgesehenen Ausnehmungen vor oder nach der Verbindungsschweißung angebracht werden, und daß schließlich die auf Vergütung des Basiswerkstoffes bzw. Aushärtung der Nickelbasislegierung ausgerichtete Wärmebehandlung vorgenommen und die Fertigbearbeitung auf das Endmaß ausgeführt wird.

## Verfahren zur Herstellung von Schermessern für Warmschnitte

Die Erfindung betrifft ein Verfahren zur Herstellung von Schermessern für Warmschnitte, z. B. für Stranggußanlagen, Brammenscheren od. dgl.

Die zur Ausführung von Warmschnitten in Stahlwerken, Hüttenbetrieben od. dgl. dienenden Schermesser sind mechanisch und thermisch einer außerordentlich hohen Beanspruchung ausgesetzt, weshalb für die Herstellung derartiger Messer nur eine sehr begrenzte Werkstoffauswahl zur Verfügung steht. Die praktisch ausschließlich dafür herangezogenen hochwarmfesten Nickel-Chrom- bzw. Nickel-Chrom-Kobalt-Legierungen werden zwar den hohen Beanspruchungen gerecht, sie sind aber sehr teuer und schwer zu bearbeiten, weshalb der vorliegenden Erfindung die Aufgabe zugrunde liegt, die Herstellung solcher Schermesser wesentlich kostengünstiger zu ermöglichen, ohne dabei eine Qualitätsminderung in Kauf nehmen zu müssen.

Die Lösung dieser Aufgabe gelingt gemäß dem Kennzeichen des erfindungsgemäßen Verfahrens dadurch, daß ein dem gewünschten Schermesserprofil entsprechender Verbundkörperrohling aus einem Warmarbeitsstahl als Basiswerkstoff und einer daraufgesetzten Schneide aus einer ausscheidungshärtbaren, warmfesten Nickelbasislegierung derart gebildet wird, daß die Verbindungsflächen gegenseitig verzahnt, vorzugsweise nach Art einer Nut/Feder- bzw. einer Schwalbenschwanz-Verbindung gestaltet sind, und daß im äußeren Fugenbereich dieser Flächen eine vorzugsweise tulpenförmig ausgeführte Verbindungsschweißung mit hochwarmfestem, thermoschockbeständigem Schweißmetall vorgenommen wird, wobei die zur Befestigung vorzugsweise im Basiswerkstoff vorgesehen en Ausnehmungen vor oder nach der Verbindungsschweißung angebracht werden, und daß schließlich die auf Vergütung des Basiswerkstoffes bzw. Aushärtung der Nickelbasislegierung ausgerichtete Wärmebehandlung vorgenommen und die Fertigbearbeitung auf das Endmaß ausgeführt wird.

Auf diese Weise kann ein beträchtlicher Anteil der teuren Nickelbasislegierung eingespart werden, aus der nun im Gegensatz zur bisher üblichen Herstellungsart nur noch der eigentliche, vielfach mit Rücksicht auf die Wirtschaftlichkeit beim Einsatz doppelseitig ausgebildete Schneidenbereich besteht.

Die Erfindung wird im folgenden unter Bezugnahme auf die ein Ausführungsbeispiel in Form eines Schermessers für eine Stranggußanlage darstellende Zeichnung näher beschrieben. Das im Längsschnitt dargestellte doppelseitige Schermesser ist aus einem Verbundkörperrohling gebildet, der aus einem Warmarbeitsstahl (Werkstoff-Nr. 1.2567) mit 0,32 % C, 0,2 % Si, 0,3 % Mn, 2,4 % Cr, 0,6 % V, 4,3 % W, Rest im wesentlichen Eisen als Grundkörper 1 und zwei Schneidenteilen 2 aus einer Nickelbasislegierung (Werkstoff-Nr. 2.4969) mit 0,1 % C, 0,3 % Si, 0,27 % Mn, 19,8 % Cr, 16,1 % Co, 2,60 % Ti, 1,50 % Al, 0,003 % B, 0,08 % Zr, Rest im wesentlichen Nickel zusammengesetzt und durch eine tulpenförmige Schweißnaht 3 im Fugenbereich verbunden wurde. Zur Ausführung der mehrlagigen Schweißnaht wurden basisch umhüllte Mantelelektroden auf Nickelbasis (Handelsbezeichnung: Böhler FOX NiCr 70 Nb) verwendet, deren auf das hochwarmfeste, Thermoschock beständige reine Schweißgut bezogene Richtanalyse vom Hersteller mit 0,06 % C, 0,6 % Si, 5,5 % Mn, 17,0 % Cr, 1,0 % Mo, Rest im wesentlichen Nickel angegeben ist.
Wie dies aus der Schnittdarstellung deutlich ersichtlich
ist, sind die jeweiligen Verbindungsflächen zwischen Grundkörper 1 und den Schneidenteilen 2 verzahnt nach Art einer
Nut/Feder-Verbindung ausgebildet, was dazu beiträgt, daß
der Schneidendruck und die beim Einsatz auftretenden hohen
Scherkräfte selbst dann noch bewältigt werden, wenn durch
mehrfaches Nacharbeiten des Messers bedingt eine unvermeidbare Schwächung der Schweißnaht eingetreten ist.

Die in der gezeigten Darstellung nicht ersichtlichen, dem
jeweiligen Einsatzzweck angepaßten Einspannlöcher wurden
noch vor der Verbindungsschweißung im Grundkörper 1 ausgebildet, dessen Festigkeit nach einer für diesen Werkstoff üblichen Ölhärtung und darauffolgendem Anlassen etwa
38 - 40 HRC betrug.

Nach der Verbindungsschweißung wurde das Ausscheidungshärten der noch vor dem Verschweißen durch 8-stündiges Erhitzen auf 1080 $^{o}$C lösungsgeglühten (und auf RT abgekühlten)
Nickelbasislegierung durch eine Wärmebehandlung bei 680 $^{o}$C
in der Dauer von 16 Stunden vorgenommen, wobei sich zugleich eine nochmalige Vergütung des Warmarbeitsstahles
ergab; die Härtewerte betrugen schließlich für den letzteren
38 bis 40 HRC und für den Schneidenwerkstoff etwa 36 HRC.

Es versteht sich von selbst, daß für den Grundkörper bzw.
den Basiswerkstoff die gesamte Gruppe der Warmarbeitsstähle zur Auswahl steht, und daß die Wahl der als Schneidenwerkstoff verwendeten Nickelbasislegierungen vorwiegend unter
dem Gesichtspunkt der für das jeweilige Schermesser beabsichtigten Dauerbelastungstemperatur getroffen wird.

Eine Anzahl der nach dem erfindungsgemäßen Verfahren hergestellten Warmschermesser befindet sich schon geraume Zeit mit bestem Erfolg in Hüttenbetrieben im Dauereinsatz.

- 5 -

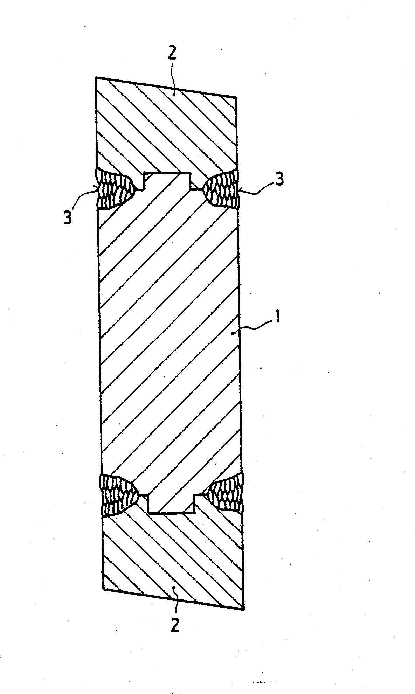

**Patentanspruch:**

Verfahren zur Herstellung von Schermessern für Warmschnitte, z.B. für Stranggußanlagen, Brammenscheren od. dgl., dadurch gekennzeichnet, daß ein dem gewünschten Schermesserprofil entsprechender Verbundkörperrohling aus einem Warmarbeitsstahl als Basiswerkstoff (1) und einer daraufgesetzten Schneide (2) aus einer ausscheidungshärtbaren, warmfesten Nickelbasislegierung derart gebildet wird, daß die Verbindungsflächen gegenseitig verzahnt, vorzugsweise nach Art einer Nut/Feder- bzw. einer Schwalbenschwanz-Verbindung gestaltet sind, und daß im äußeren Fugenbereich dieser Flächen eine vorzugsweise tulpenförmig ausgeführte Verbindungsschweißung (3) mit hochwarmfestem, thermoschockbeständigem Schweißmetall vorgenommen wird, wobei die zur Befestigung vorzugsweise im Basiswerkstoff (1) vorgesehenen Ausnehmungen vor oder nach der Verbindungsschweißung angebracht werden, und daß schließlich die auf Vergütung des Basiswerkstoffes bzw. Aushärtung der Nickelbasislegierung ausgerichtete Wärmebehandlung vorgenommen und die Fertigbearbeitung auf das Endmaß ausgeführt wird.